Europäisches Patentamt

European Patent Office

Office européen des brevets

(11) Publication number : **0 499 565 A2**

(12) **EUROPEAN PATENT APPLICATION**

(21) Application number : 92480006.3

(22) Date of filing : 14.01.92

(51) Int. Cl.⁵ : **G06F 3/14**

(30) Priority : **14.02.91 US 655880**

(43) Date of publication of application :
**19.08.92 Bulletin 92/34**

(84) Designated Contracting States :
**DE FR GB**

(71) Applicant : **International Business Machines
Corporation
Old Orchard Road
Armonk, N.Y. 10504 (US)**

(72) Inventor : **Eagen, Stephen Troy
2400 13th Avenue N.W.
Rochester, Minnesota 55901 (US)**
Inventor : **Kiel, Harvey Gene
1268 Buckridge Drive N.E.
Rochester, Minnesota 55906 (US)**

(74) Representative : **Vekemans, André
Compagnie IBM France Département de
Propriété Intellectuelle
F-06610 La Gaude (FR)**

(54) Method and apparatus for presenting selection fields on non-programmable workstations.

(57)    In a computing system including a host processor, a workstation controller, and a number of nonprogrammable workstations (NWS₁, NWS₂, ..., NWSₙ) connected to the workstation controller, the improvement in workstation controller and host processor design to allow the workstation controller to receive selection field constructs from the host processor for each of the workstations to which it is connected, and the workstation controller to present selection field display panels to each of the workstations and to decode keystroke signals received from the workstations whichg relate to the selection field display panels.

FIG. 5

EP 0 499 565 A2

The present invention relates generally to computer workstations which are connected for information interchange with host or mainframe computer systems; more particularly, the invention relates to a method and apparatus for presenting selection fields on certain non-programmable computer workstations by sharing the selection field processing operations amongst a workstation control interface, a host processor and a non-programmable workstation. The invention enhances the user interface associated with non-programmable workstations, to be more closely representative of the user interface associated with programmable workstations.

In any typical prior art system utilizing a host processor, workstation control interface, and workstations, wherein the workstations are utilized for user interaction and access and the host processor is utilized for running applications programs, the host processor provides certain fundamental information. For example, the host processor may generate a data stream containing information to be displayed on a workstation screen, and information for controlling the presentation and position of the data on the screen. In the case of a programmable workstation (PWS), the host processor data stream is sent directly to the workstation and is processed internally in the workstation, which itself contains sufficient internal memory and program data to directly control the interaction with the display screen and keyboard. In the case of a non-programmable workstation (NWS), the host processor data stream is sent to a workstation controller (WSC), and the WSC provides the internal memory and control for directly controlling the display screen of the NWS. In either case, the host processor-constructed data stream is received by a workstation control interface (hardware and/or software), and the workstation control interface processes the data stream. A workstation controller communicates with attached NWS workstations to determine whether a keystroke should be recognized or whether any of a predetermined number of commands from the workstation controller have been processed.

Although a PWS terminal is of considerably more sophisticated design than an NWS terminal, when it is used in an environment where a host processor executes applications programs and merely utilizes the PWS terminal for NWS-like operator/user interface, the PWS terminal suffers from most of the same limitations as an NWS terminal. For example, each time a display panel is to be changed on the screen of either type of terminal as a result of user interaction, the host processor creates the panel description, and presentation, and constructs a data stream for transmission to the workstation controller.

The inherent superiority of the logical design sophistication of a PWS enables the designer to incorporate certain user interface enhancements into a stand-alone PWS application, which enhancements have heretofore been unavailable in systems utilizing NWS terminals. One such enhancement, the "selection field," is a widely used PWS enhancement, whereas this enhancement has been unable to be used in systems having NWS terminals because the internal logical design capability of an NWS terminal is simply too limited to permit the processing operations required. These limitations have forced users of NWS terminals to operate under a different and more limited set of interface rules than users of PWS-based applications. However, since a total system environment may include a host processor connected to a significant plurality of mixed workstation environments, a system user must be familiar with both sets of operating rules in'order to effectively interface with the application program being run, through either a PWS terminal or an NWS terminal.

The necessity that a system user be knowledgeable of different sets of user interface rules seriously compromises the operational effectiveness of the total system. The dilemma arises from the historically competing demands of increased sophistication and uniformity of operation versus the competitive demands of system costs. The market-place has created a demand for low-cost keyboard/display terminals, which has resulted in the widespread use of NWS terminal devices; system users have created a demand for increasingly sophisticated and "user-friendly" interactions with applications, which has led to the design of the PWS terminal devices. Computer manufacturers, in an effort to satisfy these competing demands, have devised uniform system architecture rules to enable the interconnection and shared usage of both NWS and PWS terminals in the same system. To the greatest extent practicable the user interface rules for these mixed systems have been uniformly devised. For example, International Business Machines (IBM) has defined a "systems application architecture" to layout a common set of rules for system design and interconnection of subsystems. The user interface to the system application architecture is also defined, and reference should be made to an IBM Publication No. SC26-4351-0, entitled "Common User Access-Panel Design and User Interaction." These common user access (CUA) rules define and describe the techniques and conventions to enable application designers and developers to create various application software that will operate effectively on a wide variety of different IBM computer systems. CUA is one part of the IBM systems application architecture (SAA), which is a complete set of selected software interfaces, conventions, and protocols that serves as a common framework for application development, portability, and use on multiple system types. Among the IBM systems to which these rules apply are the System/370, IBM Personal Computers, and AS/400 System. CUA rules are uniformly devised except, as here, where hardware limitations prevent such uniformity.

The present invention overcomes apparent hardware limitations in NWS devices to enable, for the first time, the use of PWS-like "selection fields" in display screen constructs for such devices. Heretofore, the concept of "selection fields" was only available for use in connection with PWS devices, because the application runs locally on the PWS, and these devices have the technical sophistication necessary to implement the selection field concepts. A "selection field" is a list of choices from which users select one (single-choice) or more (multiple-choice) entries. The selection field is a relatively new type of input field, complementing the conventional entry input field in which data is entered from the keyboard. Reference should be made to the aforementioned IBM publication for a description, definition and presentation of selection fields, and for the user interaction with selection fields.

The present invention provides a method and apparatus for constructing and presenting selection fields in display panel constructs associated with NWS terminals, particularly in systems having a host processor interconnected via workstation controllers to a plurality of NWS terminals. In particular, the invention enables the user of an NWS terminal to select display screen items via the keyboard slash key, space key, numeric keyboard characters, mnemonic keyboard characters, together with the enter key. Further, the invention enables a system having NWS terminals to perform real-time selection feedback and to process cursor movement keys in the same apparent manner as PWS terminals. The invention utilizes an extended data stream transmitted from a host applications program to set aside localized data storage areas in the interconnected WSC, associated with a group of NWS terminals, to define the parameters of selection field choices. In addition, the invention utilizes processing techniques in the WSC to interact with the NWS keyboard and display screen, to thereby distribute the processing activities amongst the host processor, the WSC, and the NWS, to provide the same degree of user interaction with respect to selection fields as was previously found only in stand-alone PWS application interactions.

It is a feature of the present invention to enable the display data manager software within a host processor to be written so as to provide a data stream which incorporates selection field definitions, and to store information from this data stream in a WSC, and to perform the necessary processing functions within the WSC to provide the selection field characteristics to an NWS.

It is the principal object of the present invention to provide user interface functions with respect to selection fields in a WSC/NWS interconnection, as were previously provided in a PWS.

The foregoing and other objects and advantages of the invention will become apparent from the following specification, and with reference to the claims and the appended drawings, in which:

FIG. 1 shows a typical block diagram of a PWS;

FIG. 2 shows a typical block diagram of an NWS;

FIG. 3 shows a typical block diagram of a workstation controller;

FIG. 4 shows a typical block diagram of a plurality of NWS devices connected to a host processor via a WSC;

FIG. 5 shows a simplified diagram illustrating display data flow in a system having NWS terminals;

FIG. 6A shows an example panel illustrating NWS selection field choices according to the prior art;

FIG. 6B shows an example panel illustrating PWS-like selection field choices on an NWS according to the invention;

FIG. 7 shows the limited steps available for selection field processing in the WSC according to the prior art;

FIG. 8A and 8B show the steps of WSC processing of certain keystrokes within a PWS-like selection field, according to the invention; and

FIG. 9 shows a flow chart illustrating the steps of WSC processing of selection field data streams from a host processor according to the invention.

## Programmable Workstation

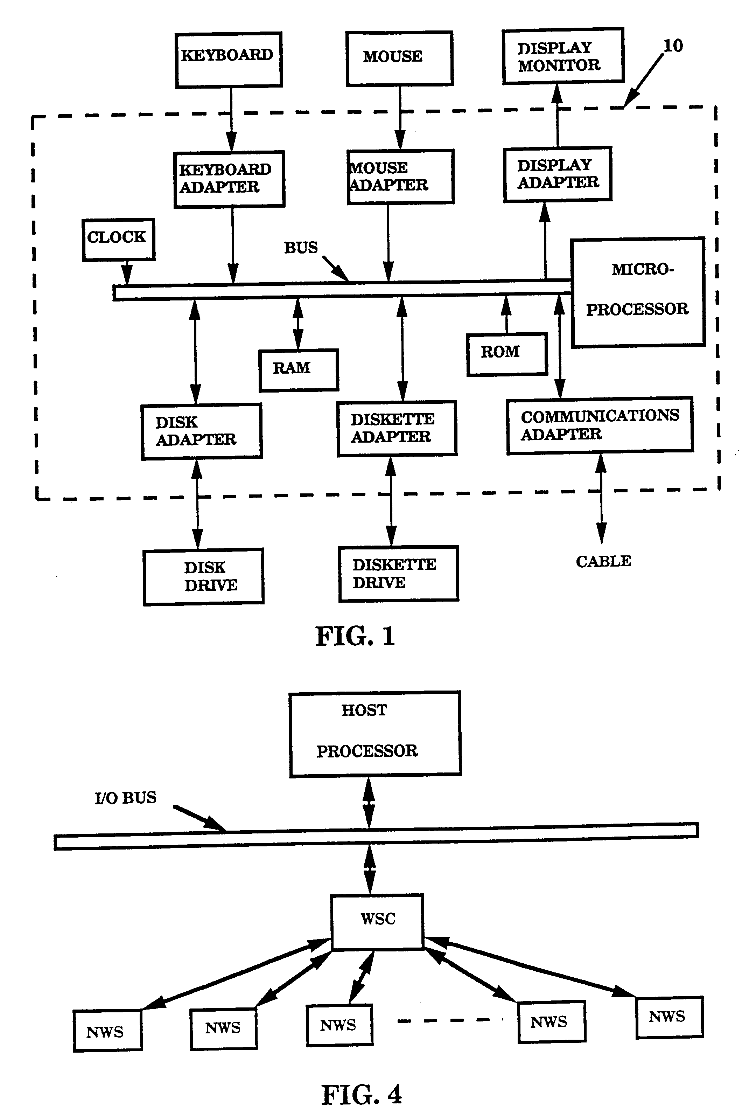

Referring first to FIG. 1, there is shown a typical block diagram of a programmable workstation (PWS); the circuits within the dotted outline 10 are generally found on one or more circuit boards within the PWS framework. The microprocessor is typically an Intel type 80286 or 80386, or equivalent microprocessors by other manufacturers. The microprocessor has an external bus which may communicate with a number of adapters which themselves are connectable to various internal and external devices.

The host processor communicates with the PWS via a communications line, identified as a "cable" in FIG. 1. A plurality of PWS devices may be connected to a host processor via such communications lines, wherein each PWS has an internal application program known as "Workstation Function," which enables the PWS to perform the same tasks as the combination of an NWS and workstation controller as hereinafter described. The host processor is not concerned with, nor does it require specific knowledge of, which of the several types of remote workstations it is communicating with. When the host processor determines that a display screen representation is to be transmitted to a remote workstation, it constructs a data stream having the content described above, which is known in the prior art as a "5250 data stream." The format of this data stream is identical for communications with a PWS and a WSC, for the Workstation Function software operating within the PWS enables the PWS to process the data stream in the same manner as a WSC would process the data stream.

While the processing actions within a PWS differ from the processing actions within a WSC, the external interaction with a host processor is identical in both cases. Likewise, when the operator at a remote workstation makes a keystroke, the processing actions which pass to the host processor are identical in either case, and the user is limited to NWS-like user interface although the internal processing within a PWS is different from the internal processing within a WSC.

The typical PWS will have a keyboard, and optionally a mouse, connected through adapters to the internal bus, a display monitor connected through an adapter to the internal bus, one or more disk or diskette adapters coupled to one or more disk or diskette drives and connected to the internal bus, and a communications adapter which is connectable to other systems via external cables. The RAM is typically a random access memory having 1-16 megabyte capacity, which is sufficiently large to store a complete operating system, an extensive work area for programmable calculations, a monitor screen buffer area and an area for executing application programs. The ROM is a read only memory which typically contains coding for initializing the machine, for performing diagnostic operations, and for controlling the basic I/O system; the ROM is typically 64-128 kilobytes in capacity. The PWS is therefore operable as a stand-alone computer system, or as an independent workstation which may be connected to a host computer via external cables. The capabilities of the PWS enable it to provide a wide variety of user interface enhancements, including a full range of cursor controls, instantaneous scrolling, and display screen modification. All of these enhancements are contained and controlled within the PWS itself, although when a PWS is connected to a host computer processor and is operated as a workstation, it receives its overall command and control from the applications software in the host processor. In the preferred embodiment, the PWS shown in FIG. 1 is an IBM Personal System/2 or equivalent, although another IBM personal computer, or equivalent design, could be used.

Non-Programmable Workstation (NWS)

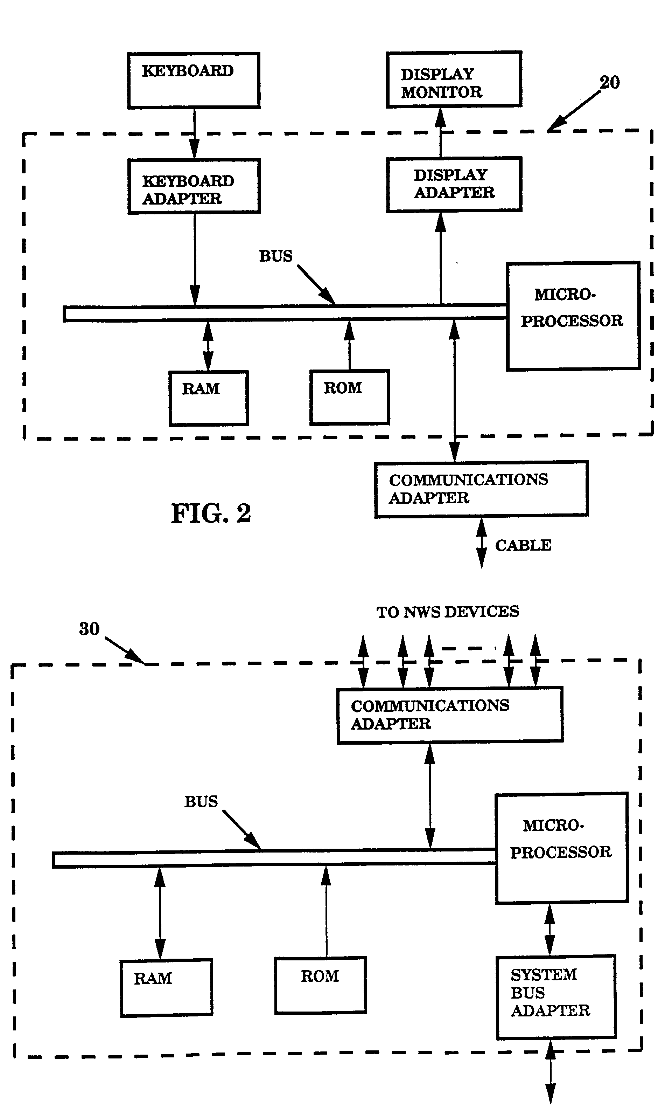

FIG. 2 shows a typical block diagram of an NWS, wherein the circuits typically found within the framework are designated within dotted outline 20. This type of workstation is also sometimes referred to as a "dependent workstation." The microprocessor is typically an Intel type 8088 or 8086 circuit device, or equivalent, and the microprocessor has an external bus which is connectable to several adapters for enabling communications with a limited number of external devices. For example, a keyboard adapter enables communications between the microprocessor and a keyboard, a display adapter enables information to be transferred to a display monitor, and a "communications" adapter enables communications to be made between the NWS and a workstation controller. The RAM is typically capable of 3-5 kilobytes of storage, for storing a screen buffer, and for providing a limited amount of memory work area for internal processing. The ROM is typically about 8 kilobytes in capacity, for storing coding relating to power-on processing, diagnostics, and character generation patterns and process communication protocols for communicating with a workstation controller.

The NWS is incapable of any significant internal processing beyond that which is required to interface with the keyboard and display monitor, and to communicate via the communications adapter. Therefore, all of the information (except for diagnostics and set-up information from ROM) displayed on the display monitor must be provided via the communications adapter to the RAM, and the microprocessor will generate sufficient internal control to display the information on the display monitor.

Similarly, all keystrokes from the keyboard are temporarily received in the RAM, subject to activation of the communications adapter for transmission of the keystroke information over the cable to the WSC. In the preferred embodiment, the NWS shown in FIG. 2 is an IBM 5250 family display, although other equivalent types of NWS could be used.

Workstation Controller (WSC)

In typical systems, the function of a "workstation controller" is to provide information transfer and control to a plurality of remote NWS terminals from a single host processor. This workstation controller function is usually performed by a hardware and software package which is uniquely identified and separate from the host processor hardware and software packages. The hardware for a workstation controller is typically contained on a circuit board package which is pluggable into a host processor card slot, and the software for a workstation controller is typically executed by the hardware independently of software which is executed by the host processor. However, in certain systems, the workstation control interface function of a "workstation controller" is entirely a software package function, the software being executed within the host processor hardware. The preferred embodiment of the present invention is disclosed with respect to the workstation controller concept which is physically separate from the host processor in both hardware and software details.

If a workstation controller is physically remotely positioned from the host processor, its communications with the host processor are made via a communication line, connected in a manner similar to the connection of various other remotely located devices. If the workstation controller is physically incorporated into the host processor mainframe as a pluggable card, the workstation controller may communicate with the host processor utilizing the normal channel connections associated with the host processor.

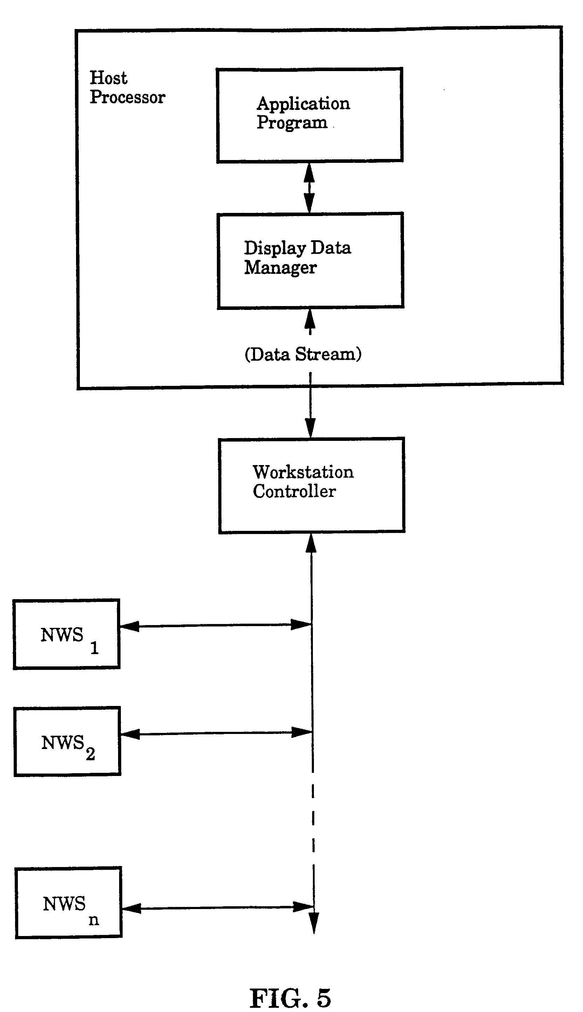

FIG. 3 shows a typical block diagram of a workstation controller, of the type which typically communicates with a plurality of NWS devices. The workstation controller has a number of circuits contained within a package designated by dotted outline 30, and a microprocessor which is typically an Intel type 80826 circuit chip, or equivalent. The WSC microprocessor is typically connected to a system bus adapter which itself may communicate with a host computer processor. The WSC also has an internal data bus and a RAM having a capacity of 0.5-2.0 megabytes, and a ROM having a capacity of about 16 kilobytes, containing coding for initializing the WSC and for diagnostics relating to the WSC. The internal data bus of the WSC is connected to a communications adapter, which is externally connected to a "fan-out" multiplexer for enabling a plurality of NWS devices to communicate with a single WSC. In a typical application, the fan-out circuits are connectable to up to 40 NWS terminals. Keystroke signals from all of the NWS terminals are received by the WSC and stored within the RAM, for subsequent communication to the host processor or for internal processing by the WSC. In the preferred embodiment the WSC of FIG. 3 is a "feature card" for an AS/400 computer system, wherein the microprocessor is suitably programmed.

FIG. 4 shows a typical block diagram of the system interconnections, wherein the host processor communicates with a WSC via an I/O bus, and a WSC communicates with up to 40 NWS devices via communications cables. Other devices and controllers may be connected to the I/O bus for communication with the host processor. In the preferred embodiment, the host processor is part of an AS/400 computer system.

Under typical operating conditions in the prior art, the host processor will construct a data stream for each of the terminals to which it is connected, the host processor will then transfer a data stream representative of each display panel, and various screen display field definitions to the WSC, where the field definitions are retained and the display panel data is temporarily retained within a section of RAM identifiable with each particular NWS. The WSC then transfers the display panel data to a specific NWS device. Each NWS device contains sufficient internal storage to retain the display panel data for purposes of presenting the display panel to the user. If an NWS user makes a keystroke, the NWS signals the WSC that the NWS has keystroke data available. The WSC receives the transfer of this keystroke data when polling the NWS.

FIG. 5 shows a simplified diagram to illustrate the display data flow in a system having NWS terminals. The host processor executes application programs as a part of its normal operating function. These application programs communicate, from time to time, with the remote terminals connected in the system, either by processing keyboard data sent from the terminals or by generating display panel information to be transmitted to the terminals for display. When an applications program needs to communicate with a remote terminal it calls up an applications program interface routine, one form of which is 'identified as a "display data manager." When information is to be displayed at a remote terminal, the display data manager constructs a data stream according to a particular format, and transmits this data stream to a workstation controller. The workstation controller selectively interacts with all of the NWS devices, selectively activating the appropriate device and then passing the information to be displayed onto the selected NWS device.

The specific programming requirements for communicating between a workstation control interface and a typical host computer processor, are described in IBM Publication No. SA21-9247-6, entitled "IBM 5250 Information Display System-Functional Reference Manual." This information is incorporated by reference herein, as a disclosure of the required programming formats and data interchange. However in addition to the disclosure therein, the present invention requires implementation of additional processes which may be incorporated into the software of the workstation control interface. In particular, the present invention is useful in processing selection fields in NWS terminals in a manner heretofore available only in PWS terminals, and improving the aesthetics in terms of user interaction with selection fields in NWS terminals.

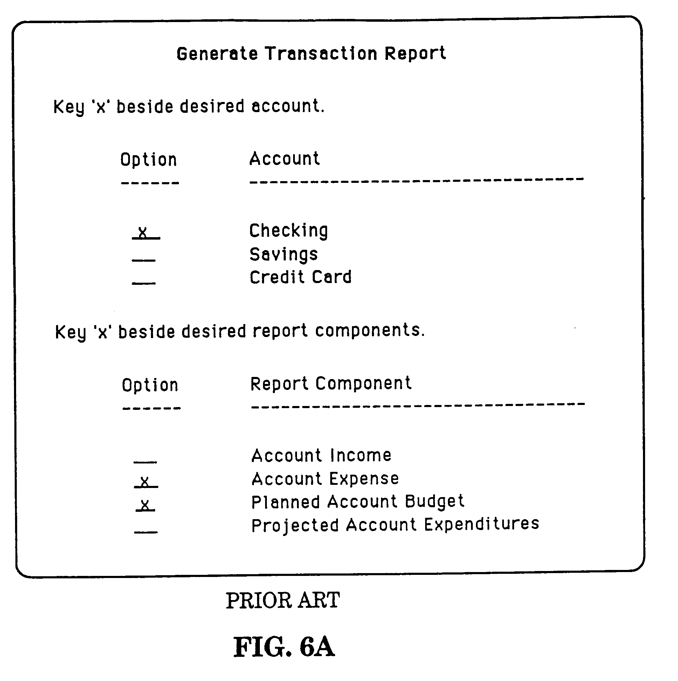

FIG. 6A shows a typical prior art display panel presentation, illustrating entry fields of the type heretofore used. The upper portion of the display panel shows three single-choice entry fields, wherein the user is required to enter an "X" character in the selected entry field; for example, the checking account entry field as illustrated. The lower half of the panel shows a multiple-choice entry field arrangement wherein the user is required to enter an "X" in each selected entry field choice; as for example, in the "account expense" and "planned account budget" report component entry fields. The user interaction procedure requires the user to first enter the appropriate "X" characters, and then to depress the "enter" key to finalize the selection. None of the selection choices are highlighted or otherwise emphasized.

Also, the application is responsible for verifying that only one selection is made in the single-choice field in the upper portion of the panel.

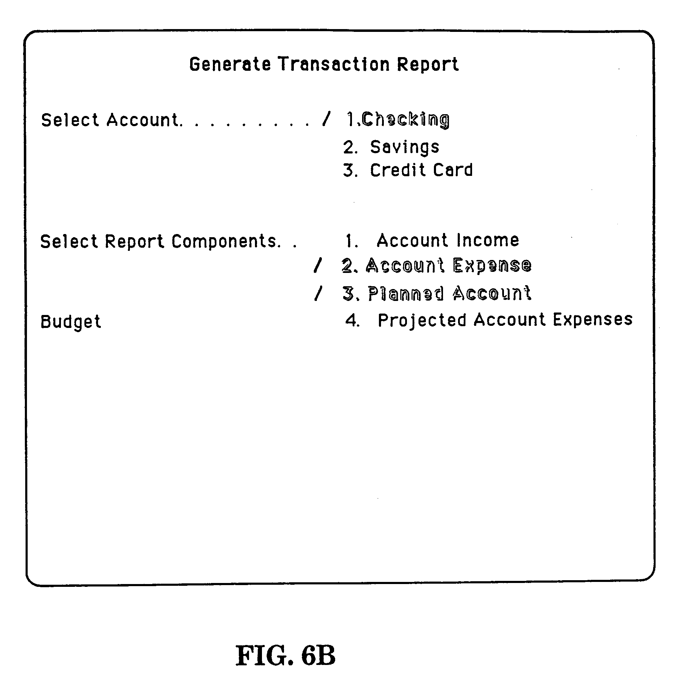

FIG. 6B shows a display panel example according to the teachings of the invention; wherein the same selection choices may be made as indicated in FIG. 6A. The upper portion of the panel illustrates a single choice entry field, wherein the user may select any one of the three selection field choices. The user interaction procedure is implemented by the user positioning a selection cursor on the selected choice; i.e., "checking." The user then depresses a "/" key, which immediately highlights the choice (a reverse-image form of highlighting is shown). The user then selects the remaining choices to be made by the same technique. When the user moves the selection cursor to the multi-choice selection field on the lower portion of the panel, the original choice made earlier remains highlighted. The user makes the multi-choice selection in the lower portion of the panel in the same manner, and in each case the selected choice is immediately highlighted. The user then depresses the enter key, which causes the WSC to transmit the display panel data to the host processor. A comparison of FIGS. 6A and 6B shows the advantages of the FIG. 6B presentation, not only with respect to the smaller amount of panel area which is required for the display panel, but also with respect to the simpler presentation of the selection field choices. Furthermore, the user receives an immediate real-time feedback concerning his selection field choices, upon making each selection. Also, the workstation controller ensures that only a single choice is selected in the upper selection field.

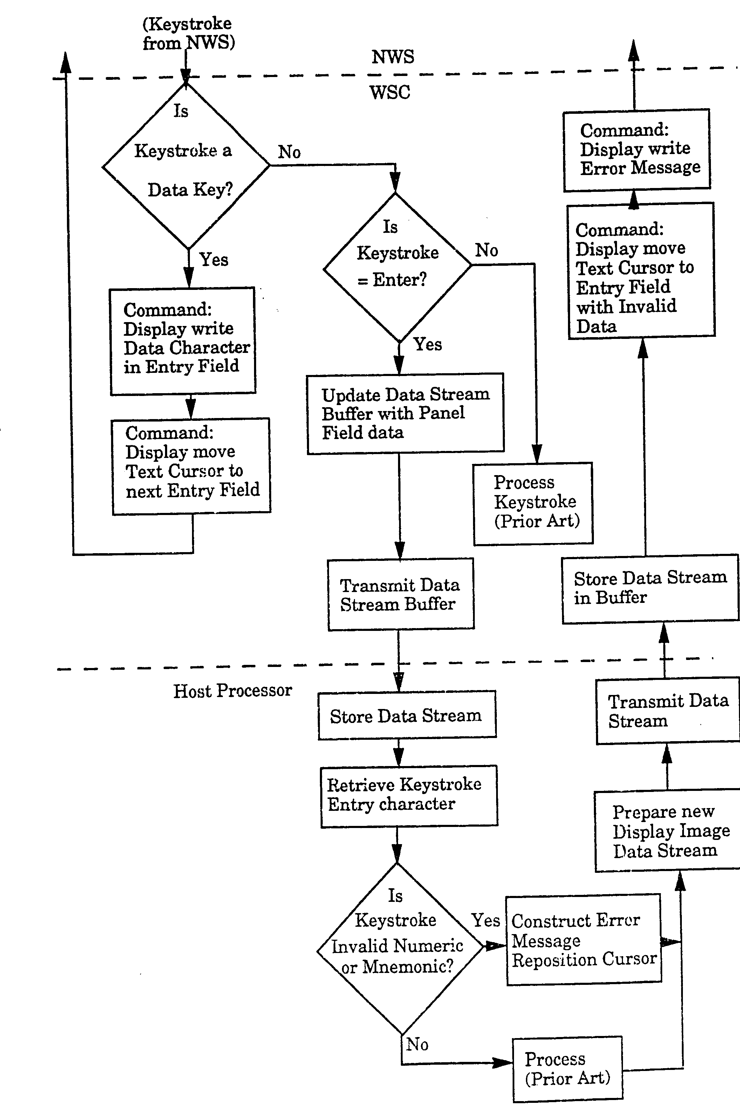

FIG. 7 illustrates a flow chart of the operational steps which are required in connection with the panel shown in FIG. 6A. Upon receiving the first "X" keystroke from the NWS, the WSC first determines whether the keystroke is a data key. Upon making this determination, the WSC prepares a command to the NWS to write the data character in the entry field where the text cursor is positioned, and prepare a second command to the NWS to move the text cursor to the next entry field. These commands are transmitted back to the NWS for execution. Upon receiving subsequent "X" keystrokes, the WSC repeats the foregoing process steps, but does nothing by way of transmitting the keystroke information to the host processor until it receives an "enter" keystroke. When an "enter" keystroke is received, the WSC then prepares an inbound data stream for transmitting the keystroke information to the host processor, initiates a data stream transfer, and sends the data stream to the host processor.

In the event the WSC receives a keystroke which is neither a data key nor a "enter" key, it processes the keystroke according to whatever prior art process steps are required for such information. These process steps may require a further data stream transmission to the host processor.

When the host processor receives the data stream it initially stores the data stream in its buffer memory, for reference by the application software for the subsequent processing steps required. One of the processing steps will be to examine the keystroke to determine whether it is an invalid selection character. If the host processor determines that the keystroke was invalid, the application program constructs an appropriate error message for the display screen and a message to reposition the text cursor to the display screen position where the invalid character originated. If the host processor determines that the keystroke was a valid selection character, it processes the character according to the application program rules. In either event, the host processor subsequently constructs a data stream to transmit a new display panel, and sends this data stream to the WSC. Upon receiving this data stream, the WSC constructs a new display panel and sends the panel data to the NWS for presentation on the screen. It is to be noted that each transmission between the WSC and the host processor requires about 1-2 seconds in time, and therefore the two transmissions which are required in the aforementioned description will consume a significant and measurable amount of user time. The net result to the user is that a noticeable period of time passes from the time the user depresses an invalid keystroke until the user sees a change on the display screen. Apart from being somewhat distracting to the user, the delay tends to make the user feel that his keystrokes are somehow disassociated from the resulting display screen panel. Because of the prior art requirement for communication from the NWS to the WSC to the host processor for making such display panel changes, it has heretofore been impractical to impose the additional processing requirements upon the host processor for dealing with selection fields. Particularly when one considers that forty or more terminals may be connected to the host processor via a WSC, the transmission delays resulting from the enhanced processing requirements of selection fields become intolerable. Therefore, user enhancements such as selection fields have simply been ignored in connection with systems utilizing NWS terminals in the prior art.

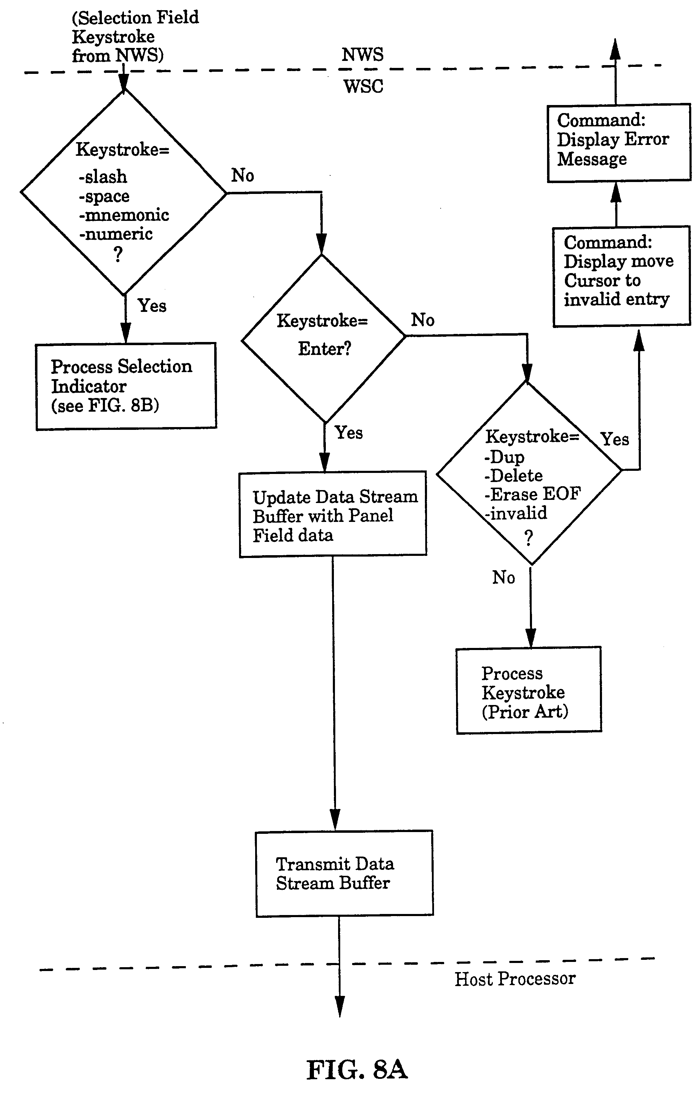

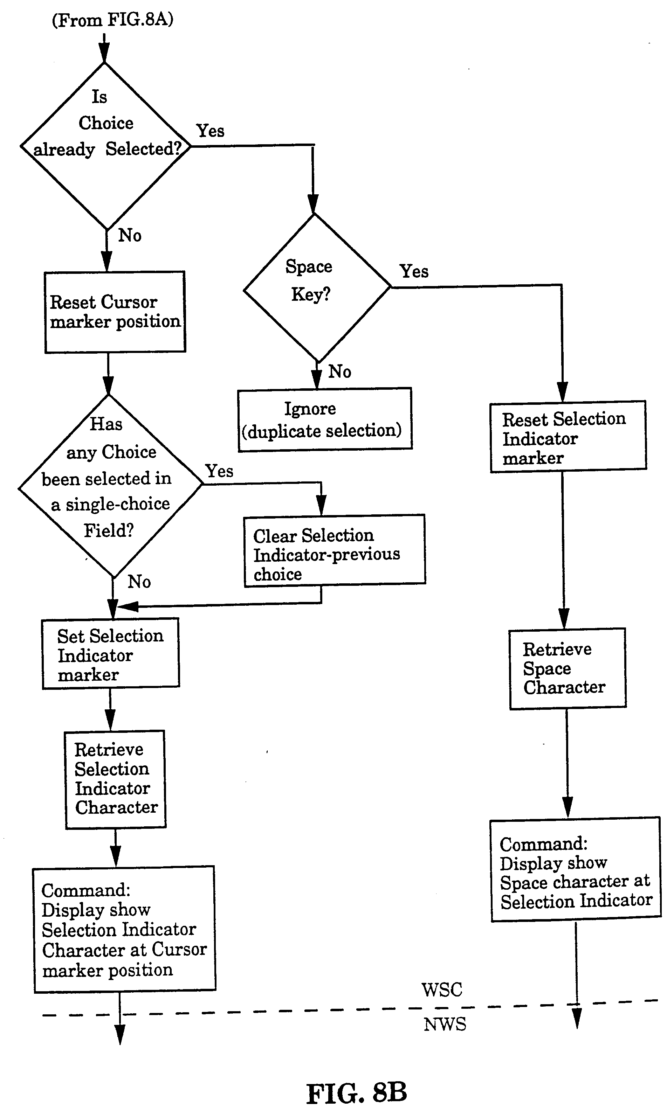

FIGS. 8A and 8B illustrate the steps of processing selection field information according to the invention. Referring first to FIG. 8A, when a user makes a keystroke at an NWS terminal within a selection field, the keystroke signal is sent to the WSC. The WSC first determines whether the keystroke was a slash, space, mnemonic, or numeric character key. If the keystroke is none of these, the WSC then determines whether the keystroke was an enter key. If the keystroke was not an enter key, the WSC next determines whether the keystroke was a duplicate (DUP), delete, erase EOF, or an invalid mnemonic or numeric character. If the keystroke was none of these, the WSC and host processor process the keystroke according to the techniques of the prior art.

If the keystroke was a duplicate (DUP), delete, erase EOF, or invalid mnemonic or numeric character, the WSC constructs an appropriate error message, and activates a command to the NWS to display the error message on the display screen. Therefore, in the case of any of the foregoing keystrokes, the user receives an immediate feedback by way of an error message display, which is in contrast with the prior art techniques. Further, the interaction to permit the detection of the error and display of the error message all occurs between the NWS and the WSC, and the WSC internally processes the necessary information without access to the host processor.

If the WSC detects the keystroke to be a "enter" keystroke, it constructs an updated data stream for transmission to the host processor, and initiates the data stream transmission to pass the display screen information to the host processor.

If the WSC detects the keystroke to be any of the slash, space, or a valid mnemonic or numeric character keystroke, the WSC processes the keystroke according to the flow chart of FIG. 8B. The WSC first determines whether the choice has been previously selected, and if it has it next determines whether the keystroke is a space key. If the keystroke is a space key the WSC toggles the selection indicator at the cursor location, and sends a command to the NWS to change the selection indicator to a space (blank) image at the cursor position. If the WSC determines that the keystroke was not a space key, and also was a choice already selected, the WSC ignores the keystroke on the assumption that the keystroke is a duplicate selection keystroke.

If the WSC determines that the selected choice has not previously been selected, it first issues a command to the NWS to move the cursor to the selected choice. In a single-choice field the WSC first determines whether any choice was previously selected, and if it was the WSC clears the selection field of the previous selection. Next, the WSC marks a selection indicator in an internal work buffer to denote the choice selected; finally, the WSC issues a command to the NWS to update the selection indicator displayed at the selection choice position. This selection indicator can be made in the form of any character which has been designated by the CUA rules to represent a selection indicator in the selection field, and a highlighting of all of the data in the selection field. After the command has been issued, the WSC waits for the arrival of a next subsequent keystroke, and repeats the process illustrated in FIGS. 8A and 8B.

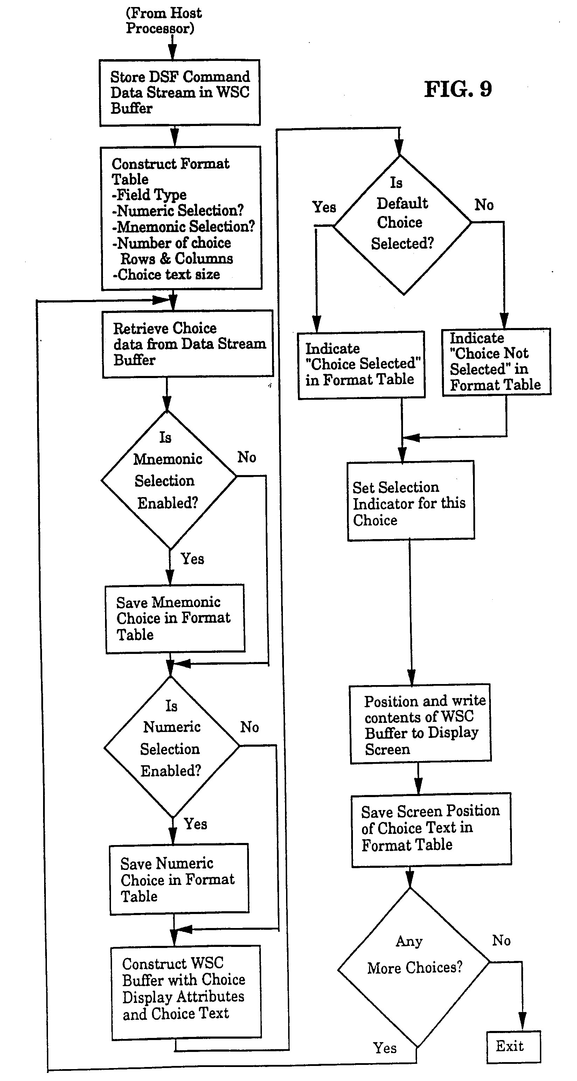

FIG. 9 shows a flow chart illustrating the steps of WSC processing of selection field data streams received from a host processor. A necessary precondition to the execution of the process steps shown in FIG. 9, is the issuance by the host processor of a "define selection field" (DSF) command. This command arrives at the WSC as a part of the 5250 data stream transmitted by the host processor. The DSF command identifies the selected terminal, and completely defines a selection field, by including a major structure with flags that define the state of the selection fields, and incorporating a set of minor structures which describe the information and options that are to be presented to the operator. The major structure includes at least 11 bytes of information which contain useful and/or necessary data for constructing the selection field, and the minor structures contain at least 6 bytes of information and options. FIG. 9 illustrates the processing of only several of the categories of information conveyed by the DSF command, by way of illustration. It is important to realize that the WSC receives and processes all of the DSF command information so that it may set up the necessary internal buffers to enable the WSC to present selection fields directly to the terminal display screen, and to interact with user keyboard inputs in updating and modifying selection field information. In this context, the WSC/terminal interaction performs the same way as a stand-alone PWS application. The significant difference between this interaction and the PWS processing of comparable information is that the WSC offers the requisite intelligence for performing these processing operations for a plurality of NWS terminals, whereas in the prior art each PWS performed the processing operations only for its own display screen and keyboard.

The WSC stores the data stream associated with the DSF command in an internal WSC buffer. The WSC then constructs a format table from information derived from the data stream, including an identification of whether the field type is a single-choice or a multiple-choice selection field, whether numeric selection indicators should be enabled or disabled, whether mnemonic selection indicators should be enabled or disabled,'an identification of the number of choice rows and columns, and an identification of the choice text size.

The WSC next retrieves the data associated with the first selection field choice to be displayed from the data stream buffer, and determines whether the mnemonic selection indicator is enabled. If mnemonic selection is enabled, the WSC saves the mnemonic choice in the format table, and next determines whether the numeric selection indicator is enabled. If the numeric selection is enabled, the WSC saves the numeric choice in the format table. After these determinations have been made, the WSC constructs an internal WSC buffer with the appropriate choice display attributes and the appropriate choice text, and their respective display panel positions. It should be noted that the display attributes are chosen by the WSC on the basis of whether the display is a color or monochrome display.

The WSC next determines whether the choice involved the selection of a default choice; depending upon this decision, the WSC makes an appropriate entry into the format table. Next, the WSC sets the selection indicators involved with the choice to the appropriate character symbol. The WSC then positions the field choice information relative to the panel display, and sends the contents of the buffer to the display screen for display. The WSC saves the screen position of the choice text in the format table, for future reference. Finally, the WSC determines whether any more choices are to be found in the selection field, and if there are any more these choices are processed in a manner similar to that described hereinabove. When the WSC finishes processing all of the choices which have been received from the host processor, it exits from the processing operation and goes into a waiting mode pending further inputs received from either the host processor or from any one of the remote terminals to which it is connected.

In operation, the selection fields which are constructed by the WSC processing operations are displayed on any of the plurality of display screens of NWS terminals to which the WSC is connected. Operator keystrokes which relate to these selection fields are processed entirely within the WSC, and the display screen of each of the terminals is updated by the WSC in real time as the operator inputs occur. Any operator keystrokes which require processing by the host processor are passed through the WSC to the host processor through operations not related to the present invention. The invention therefore provides PWS-like selection field enhancements to a plurality of NWS terminals, and services the selection field processing requirements for all of the connected NWS terminals, to create an apparent enhancement of the NWS terminal performance. However, the performance enhancement is actually accomplished by the WSC on a more or less time-shared basis, wherein the WSC provides the enhanced logic capabilities to each of the plurality of NWS terminals to which it is attached.

**Claims**

1. In a computing system comprising a host processor, a workstation controller connected to the host processor, and a plurality of non-programmable workstations connected to the workstation controller, the improvement in presenting selection fields to the workstations, comprising:

a) means for transmitting data streams from said

host processor to said workstation controller, the data streams including data representative of selection field constructs and positions for any of the workstations;

b) means in said workstation controller for constructing format tables for each of said workstations, each of said format tables including selection field constructs and position information for displaying panels containing said selection fields on designated ones of said workstations, and keystroke signals which relate to said selection fields;

c) means in said workstation controller for

selectively transmitting display panel data including selection field constructs and position to designated ones of said workstations, and means in said designated ones of said workstations for displaying said display panel data; and

d) means for transmitting keystroke signals from

each of said workstations to said workstation controller, and means in said workstation

controller for decoding said keystroke signals to identify keystroke signals which relate to said selection fields, and further means in said workstation controller for transmitting further display panel data to the keystroke-originating workstation, said further display panel data modifying the display panel in said workstation to respond to the decoded keystroke signal.

2. The apparatus of claim 1, wherein said further means in said workstation controller for transmitting further display panel data further comprises means for displaying highlighted data to identify a selection field associated with a decoded keystroke relating to said selection field.

3. The apparatus of claim 1, wherein said means in said workstation controller for constructing format tables for each of said workstations further comprises means for constructing format tables identifying single or multiple choice selection fields, mnemonic or numeric selection field choices, and number of rows and columns of selection field choices to be displayed at each of said workstations.

4. The apparatus of claim 1, wherein said workstation controller further comprises means for selectively transmitting keystroke signals to said host processor.

5. The apparatus of claim 1, wherein said workstation controller further comprises means for decoding certain keystroke signals and, responsive thereto, means for transmitting error signal display screen image signals to the keystroke-originating workstation.

6. Apparatus for processing selection fields within a single workstation control interface connected to a host processor and connected to a plurality of workstations, comprising:

a) means for transmitting a data stream between said host processor and said workstation control interface, said data stream including information identifying a designated workstation and defining selection field constructs for the designated workstation;

b) means in said workstation control interface for

constructing format tables for said designated workstation, said format tables including selection field constructs and display position information for displaying panels containing said selection fields at said designated workstation;

c) means in said workstation control interface for

selectively transmitting said information for displaying panels to said designated workstation, and means in said designated workstation for displaying panels including said information;

d) means for transmitting keystroke signals from

said designated workstation to said workstation control interface, and means in said workstation control interface for decoding said keystroke signals to identify signals which relate to said selection fields; and

e) further means in said workstation control interface for transmitting further display panel information to said designated workstation to modify the selection field display panel at said designated workstation to respond to a transmitted keystroke signal.

7. The apparatus of claim 6, wherein said further means comprises means for highlighting a selection field at said designated workstation.

8. A method for processing selection fields within a single workstation control interface connected to a host processor and connected to a plurality of workstations, comprising the steps of:

a) transmitting a data stream between said host

processor and said workstation control interface, said data stream including information identifying a designated workstation and defining selection field constructs for the designated workstation;

b) constructing, in said workstation control

interface, at least one format table for said designated workstation, including selection field constructs and display position information for displaying panels containing said selection fields;

c) selectively transmitting said display position

position information for displaying panels containing said selection fields from said workstation control interface to said designated workstation;

d) displaying display panels at said designated

workstation, said display panels including said selection fields;

e) transmitting keystroke signals from said

designated workstation to said workstation control interface;

f) decoding said transmitted keystroke signals in

said workstation control interface to identify signals which relate to selection fields; and

g) transmitting further display panel information

from said workstation control interface to said designated workstation, to modify the selection field display panel at said designated workstation, in response to said decoded keystroke signal.

**FIG. 1**

**FIG. 4**

KEYBOARD

DISPLAY MONITOR

20

KEYBOARD ADAPTER

DISPLAY ADAPTER

BUS

MICRO-PROCESSOR

RAM

ROM

COMMUNICATIONS ADAPTER

FIG. 2

CABLE

TO NWS DEVICES

30

COMMUNICATIONS ADAPTER

BUS

MICRO-PROCESSOR

RAM

ROM

SYSTEM BUS ADAPTER

**FIG. 5**

```
┌─────────────────────────────────────────────────────────┐
│                                                         │
│           Generate Transaction Report                   │
│                                                         │
│                                                         │
│   Key 'x' beside desired account.                       │
│                                                         │
│                                                         │
│          Option          Account                        │
│          ------          ----------------------------   │
│                                                         │
│                                                         │
│            x             Checking                       │
│            __            Savings                        │
│            __            Credit Card                    │
│                                                         │
│                                                         │
│   Key 'x' beside desired report components.             │
│                                                         │
│                                                         │
│          Option          Report Component               │
│          ------          ----------------------------   │
│                                                         │
│                                                         │
│            __            Account Income                 │
│            x             Account Expense                │
│            x             Planned Account Budget          │
│            __            Projected Account Expenditures  │
│                                                         │
└─────────────────────────────────────────────────────────┘
```

PRIOR ART

# FIG. 6A

### Generate Transaction Report

Select Account. . . . . . . . . . / 1. Checking
                                           2. Savings
                                           3. Credit Card

Select Report Components. .    1. Account Income
                              / 2. Account Expense
                              / 3. Planned Account
Budget                         4. Projected Account Expenses

## FIG. 6B

(Keystroke from NWS)

NWS
WSC

**Is Keystroke a Data Key?** — No

Yes

Command: Display write Data Character in Entry Field

Command: Display move Text Cursor to next Entry Field

**Is Keystroke = Enter?** — No

Yes

Update Data Stream Buffer with Panel Field data

Process Keystroke (Prior Art)

Transmit Data Stream Buffer

Command: Display write Error Message

Command: Display move Text Cursor to Entry Field with Invalid Data

Store Data Stream in Buffer

Host Processor

Store Data Stream

Retrieve Keystroke Entry character

Transmit Data Stream

Prepare new Display Image Data Stream

**Is Keystroke Invalid Numeric or Mnemonic?** — Yes → Construct Error Message Reposition Cursor

No

Process (Prior Art)

15

**FIG. 8A**

(From FIG.8A)

Is Choice already Selected?

Yes

No

Reset Cursor marker position

Space Key?

Yes

No

Ignore (duplicate selection)

Reset Selection Indicator marker

Has any Choice been selected in a single-choice Field?

Yes

Clear Selection Indicator-previous choice

No

Set Selection Indicator marker

Retrieve Space Character

Retrieve Selection Indicator Character

Command: Display show Selection Indicator Character at Cursor marker position

Command: Display show Space character at Selection Indicator

WSC

NWS

FIG. 8B

(From Host
Processor)

Store DSF Command
Data Stream in WSC
Buffer

FIG. 9

Construct Format
Table
-Field Type
-Numeric Selection?
-Mnemonic Selection?
-Number of choice
 Rows & Columns
-Choice text size

Is
Default
Choice
Selected?

Yes          No

Retrieve Choice
data from Data Stream
Buffer

Indicate
"Choice Selected"
in Format Table

Indicate
"Choice Not
Selected" in
Format Table

Is
Mnemonic
Selection
Enabled?

No

Set Selection
Indicator for this
Choice

Yes

Save Mnemonic
Choice in Format
Table

Is
Numeric
Selection
Enabled?

No

Position and write
contents of WSC
Buffer to Display
Screen

Yes

Save Numeric
Choice in Format
Table

Save Screen Position
of Choice Text in
Format Table

Construct WSC
Buffer with Choice
Display Attributes
and Choice Text

Any
More Choices?

No

Yes

Exit